(19) **Europäisches Patentamt**
**European Patent Office**
**Office européen des brevets**

(11) **EP 2 091 863 B1**

(12) **FASCICULE DE BREVET EUROPEEN**

(45) Date de publication et mention
de la délivrance du brevet:
**07.07.2010 Bulletin 2010/27**

(21) Numéro de dépôt: **07857423.3**

(22) Date de dépôt: **11.12.2007**

(51) Int Cl.:
*C01B 3/00* $^{(2006.01)}$     *G21B 1/11* $^{(2006.01)}$

(86) Numéro de dépôt international:
**PCT/EP2007/063739**

(87) Numéro de publication internationale:
**WO 2008/071716 (19.06.2008 Gazette 2008/25)**

(54) **COMPOSITION MINERALE APTE A PIEGER L'HYDROGENE, PROCEDE DE PREPARATION ET UTILISATIONS**

MINERALZUSAMMENSETZUNG ZUM EINFANGEN VON WASSERSTOFF, VERFAHREN ZU IHRER HERSTELLUNG UND VERWENDUNG

MINERAL COMPOSITION CAPABLE OF TRAPPING HYDROGEN, METHOD FOR PREPARING THE SAME AND USES THEREOF

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **12.12.2006 FR 0655437**

(43) Date de publication de la demande:
**26.08.2009 Bulletin 2009/35**

(73) Titulaire: **Commissariat à l'Énergie Atomique et aux Énergies Alternatives**
**75015 Paris (FR)**

(72) Inventeur: **RIGLET-MARTIAL, Chantal**
**13100 Le Tholonet (FR)**

(74) Mandataire: **Ilgart, Jean-Christophe et al**
**Brevalex**
**3, rue du Docteur Lancereaux**
**75008 Paris (FR)**

(56) Documents cités:
**FR-A1- 2 859 202**     **US-A- 3 412 103**

- **WINKLER A ET AL: "Internal state distribution of molecular hydrogen isotopes desorbing from clean and modified Ni(110) surfaces" CHEMICAL PHYSICS LETTERS NETHERLANDS, vol. 226, no. 5-6, 26 août 1994 (1994-08-26), pages 589-594, XP002446750 ISSN: 0009-2614**
- **YAMADA T ET AL: "Catalytic isotope scrambling of H2+D2 and the formation of surface compounds involving oxygen on Ni(100) modified by sulfur" SURFACE SCIENCE NETHERLANDS, vol. 207, no. 2-3, janvier 1989 (1989-01), pages 323-343, XP002446751 ISSN: 0039-6028**

**Description**

**DOMAINE TECHNIQUE**

La présente invention se rapporte à une composition apte à piéger le dihydrogène de manière irréversible et à un procédé de préparation de cette composition.

La présente invention se rapporte également à des matériaux organiques comprenant une telle composition.

La présente invention trouve des applications dans toutes situations, par exemple dans l'industrie ou en laboratoire, où de l'hydrogène ou du tritium gazeux est généré, dégagé ou évacué, dans l'objectif par exemple d'en limiter les rejets, notamment pour des raisons de pollution ou de contamination, ou d'en contrôler les teneurs dans des milieux confinés, notamment pour des raisons de sécurité.

Une application importante concerne l'incorporation de la composition de l'invention dans un matériau, par exemple de conditionnement de déchets, par exemple un bitume, au sein duquel de l'hydrogène est susceptible de se former, notamment par radiolyse. Le piégeage instantané de l'hydrogène généré *in situ* permet au matériau de conserver son intégrité, c'est-à-dire qu'il ne se déforme pas, ni ne se fissure, ce qui augmente considérablement sa tenue mécanique vis-à-vis de la production de gaz et donc sa durabilité.

**ÉTAT DE LA TECHNIQUE ANTÉRIEURE**

L'hydrogène est un gaz potentiellement dangereux susceptible de s'enflammer ou d'exploser en présence d'air. Dans les installations industrielles, la prévention du risque hydrogène peut être assurée, par exemple, par une ventilation appropriée de l'installation, soit encore par une élimination chimique de l'hydrogène, cette élimination pouvant se faire par combustion contrôlée dudit hydrogène ou encore par piégeage par voie catalytique en milieu oxygénée ou par voie chimique en milieu appauvri en oxygène.

On précise que, dans ce qui précède et ce qui suit, on entend par hydrogène, l'hydrogène gazeux $H_2$ et les formes isotopiques de celui-ci, c'est-à-dire les formes deutériées, telles que HD, $D_2$, les formes tritiées, telles que HT, $T_2$ et les formes mixtes (c'est-à-dire à fois deutériées et tritiées) telles que DT.

On précise que D correspond au deutérium $_1^2 H$ et que T correspond au tritium $_1^3 H$.

Dans le cas d'un milieu confiné pauvre en oxygène, les composés chimiques piégeurs d'hydrogène les plus couramment utilisés sont des composés organiques, tels que ceux décrits dans WO-A-0168516 ou US-B-6,645,396, des hydrures métalliques, tels que ceux décrits dans US-A-5,888,665 ou des oxydes métalliques. Selon l'application envisagée, ces composés peuvent présenter un certain nombre d'inconvénients liés, par exemple, à la réversibilité potentielle du piégeage, à leur instabilité à long terme (problèmes de décomposition chimique, radiolytique...), et aux conditions de mise en oeuvre (température, catalyseur...).

Par ailleurs, les recherches sur la réactivité de l'hydrogène vis à vis des matériaux solides se sont intensifiées ces dernières années, notamment dans le cadre du développement des piles à combustible, sur la voie de composés permettant un conditionnement réversible de l'hydrogène. Dans ce contexte, les matériaux les plus prometteurs actuellement sont des composés solides de type hydrures, par exemple de palladium, titane- fer, magnésium-nickel, zirconium-manganèse, lanthane-nickel, etc., dont les capacités d'adsorption exprimées en masse de $H_2$ piégé par masse de métal se situent pour la plupart à une valeur de 1 à 2%, ou des structures tubulaires carbonées de la taille du nanomètre (nanotubes) telles que celles décrites dans le document WO-A-9726082, pouvant présenter des capacités d'adsorption très importantes.

La sûreté et la compacité sont les avantages significatifs de ces modes de conditionnement. Les inconvénients majeurs résident dans leur coût, leur efficacité, leur faisabilité et leur disponibilité.

Il faut noter que les avantages et inconvénients des différents composés piégeurs connus sont étroitement liés à leurs applications: ainsi, par exemple, la réversibilité du piégeage/stockage de $H_2$ constitue l'objectif essentiel des matériaux développés dans le cadre des piles à combustibles alors que cette propriété est rédhibitoire pour des applications telles que le piégeage de $H_2$ généré par radiolyse dans les enrobés bitume de déchets radioactifs..

Dans l'industrie nucléaire, les déchets radioactifs de faible et moyenne activité sont conditionnés dans des matrices solides, comme le bitume par exemple. Parmi les matériaux de conditionnement utilisés, le bitume présente de nombreux avantages pour le confinement et le conditionnement des déchets. Majoritairement constitué de composés aromatiques, il compte parmi les matrices organiques les moins sensibles à l'irradiation. Ainsi, son taux de production d'hydrogène de radiolyse est plutôt faible, de l'ordre de 0,4 molécules/100 eV. Néanmoins, compte tenu de ses propriétés de transfert très faibles, ce qui en fait un atout vis à vis de l'intrusion d'espèces et du relâchement de radionucléides en scénarios d'entreposage ou de conditionnement, la matrice bitume évacue difficilement l'hydrogène généré *in situ* par radiolyse, ce qui peut engendrer une perte d'intégrité du matériau (gonflement, fissuration) si l'activité incorporée dans le matériau dépasse le seuil correspondant à la capacité maximale d'évacuation par diffusion.

Les inconvénients liés au gonflement par radiolyse interne de la matrice bitume limitent significativement les activités admissibles incorporables par colis de déchets d'où une augmentation du nombre de colis produits, ce qui est économiquement défavorable.

L'incorporation d'un composé piégeur d'hydrogène dans les colis bitumés de déchets radioactifs permettrait d'une part de réduire significativement leur aptitude au gonflement en situation d'entreposage et d'autre part d'augmenter sensiblement les activités équivalentes incorporées par colis de déchets tout en garantissant une bonne tenue mécanique du matériau vis-à-vis de la production de gaz. Or les composés de type organique, hydrures ou nanotubes sont mal adaptés dans ce contexte, du fait des inconvénients déjà cités de ces matériaux, auxquels s'ajoute la réversibilité potentielle du piégeage ainsi que le risque d'incompatibilité, chimique notamment, au sein des colis de déchets radioactifs. La réversibilité potentielle du piégeage est un inconvénient majeur de certains composés piégeurs de $H_2$ connus, pour l'application piégeage de $H_2$ de radiolyse dans les enrobés bitume.

C'est donc en particulier pour pallier ce problème de gonflement des colis de déchets que le composé piégeur de type MXOH a été mis en oeuvre dans le procédé de conditionnement en matrice bitume des déchets radioactifs de faible et moyenne activité. La formulation de ce composé et plus particulièrement CoSOH (M = Co = cobalt ; X = S = soufre), son procédé de fabrication et ses utilisations ont fait l'objet du brevet FR2859202. Ce composé dispose de plusieurs atouts majeurs pour l'application relative aux conditionnements de déchets radioactifs de faible et moyenne activité en matrice bitume car il répond parfaitement aux critères d'irréversibilité et quantitativité du piégeage, de compacité et de bonne capacité de piégeage, de fabrication simple et manipulation aisée, de stabilité vis-à-vis des éventuelles agressions extérieures (chimiques ou radiolytiques), de large spectre d'utilisation, et de faible coût.

Le composé CoSOH possède une capacité de piégeage de 0,5 mol $H_2$ / mol Co, soit 190 L de $H_2$ TPN/kg Co (TPN : Conditions normales de température et de pression, 273° K et $10^5$ Pa), soit une capacité exprimée en masse de $H_2$ piégé par masse de Co de 1,7 %, ce qui le situe parmi les composés piégeurs de $H_2$ actuellement connus les plus performants. Néanmoins, pour l'ensemble des applications liées à la mitigation du risque hydrogène et notamment pour l'application aux déchets nucléaires conditionnés en matrice organique, l'objectif est de disposer de systèmes chimiques piégeurs de $H_2$ toujours plus performants tout en répondant aux critères d'irréversibilité, quantitativité, compacité, stabilité... énoncés précédemment. La présente invention a précisément pour objet de répondre au besoin de disposer, dans le cadre de la prévention du risque hydrogène ou de la maîtrise du gonflement des colis de déchets radioactifs, de pièges irréversibles de l'hydrogène de forte capacité.

Les auteurs se sont fixés pour objectif d'améliorer les propriétés de piégeage des composés de type MX (OH) objet de la demande de brevet FR 2859202.

Ils ont découvert ainsi, de manière surprenante qu'en ajoutant un composé particulier aux composés MX (OH) mentionnés ci-dessus, il était possible d'améliorer de manière significative, la capacité de piégeage du système résultant.

## EXPOSÉ DE L'INVENTION

Ainsi, l'invention a trait, selon un premier objet à une composition apte à piéger de l'hydrogène comprenant :

(a) au moins un composé minéral de formule (I) suivante :

$$MX (OH) \qquad (I)$$

dans laquelle :

- M représente un élément de transition divalent ;
- O représente un atome d'oxygène ;
- X représente un atome choisi parmi S, Se, Te, Po; et
- H représente un atome d'hydrogène ; et

(b) au moins un sel de nitrate de formule (II) suivante :

$$ZNO_3 \qquad (II)$$

dans laquelle Z est un cation monovalent.

Un des avantages principaux de cette composition est qu'elle piège spontanément et quantitativement l'hydrogène gazeux depuis la pression atmosphérique ($10^5$ Pa) et jusqu'à de très faibles pressions (< $10^3$ Pa) à température ambiante. De plus, il a été constaté, par rapport au composé MX (OH) seul, une amélioration significative de la capacité de piégeage de l'hydrogène, cette capacité étant multipliée par un facteur de l'ordre de 3,5.

M peut être choisi avantageusement dans le groupe constitué par Cr, Mn, Fe, Co, Ni, Cu, Zn. De préférence, M est Co ou Ni. De préférence encore, M est Co.

De préférence, X est S.

Z peut être choisi avantageusement dans le groupe constitué par $Li^+$, $Na^+$ ou $K^+$. De préférence, Z est $Na^+$.

Pour les compositions de l'invention, de préférence, le rapport molaire ($NO_3$/M) (c'est-à-dire le rapport du nombre de moles de $NO_3$ sur le nombre de moles de M) est supérieur à 0,5. De préférence, ($NO_3$/M) est compris entre 0,5 et 2. Il a été constaté, de manière surprenante, dans ces conditions que la capacité de piégeage de la composition était maximale et ne dépendait plus du rapport molaire ($NO_3$/M).

Pour un rapport ($NO_3$/M) inférieur à 0,5 et supérieur à 0, il a également été observé une amélioration significative de la capacité de piégeage de la composition par rapport au composé MXOH seul, cette amélioration étant dépendante du rapport ($NO_3$/M).

De manière générale, les compositions de l'invention sont fabriquées par un procédé comprenant :

- une étape de préparation du (des) composé(s) de formule (I) tel(s) que défini(s) ci-dessus ;
- une étape de fourniture en composé(s) de formule (II), cette étape pouvant avoir lieu avant, simultanément et/ou après l'étape de préparation du(des) composé(s) de formule (I).

L'étape de préparation du composé de formule (I) repose sur le mélange en solution aqueuse d'un sel dissous de X (c'est-à-dire $X^{2-}$) et d'un sel dissous de M (c'est-à-dire $M^{2+}$).

Les concentrations des deux réactifs en solution aqueuse peuvent varier dans une large gamme jusqu'à leur limite de solubilité, par exemple de $10^{-1}$ M à 1,5 M.

Les composés de formule (I) peuvent être synthétisés par mélange de deux solutions aqueuses, une première solution aqueuse comprenant le (les) sel(s) dissous de X et une deuxième solution aqueuse comprenant le(les) sel(s) métallique(s) dissous.

Les composés de formule (I) peuvent être également synthétisés par dissolution simultanée ou bien successive des deux réactifs, c'est-à-dire d'au moins un sel métallique dans une seule solution aqueuse.

Le sel dissous de M (c'est-à-dire $M^{2+}$) peut être choisi parmi $MSO_4$, $M(ClO_4)_2$, $MCl_2$.

Le sel dissous de X (c'est-à-dire $X^{2-}$) peut être choisi parmi $Na_2X$, $(NH_4)_2X$, $Li_2X$, $K_2X$ ou un mélange de ceux-ci.

Il est très avantageux de procéder au mélange du sel dissous de X et du sel dissous de M, à l'air pendant un temps suffisant pour obtenir une stabilisation des paramètres $E_H$ et pH, par exemple, pour $E_H$ à une valeur comprise entre -150 et +100 mV par rapport à l'électrode de référence Ag(s)/AgCl(s)/KClsaturée et pour pH à une valeur comprise entre 8,0 et 9,5. Dans ces conditions, le rendement de synthèse du composé MXOH est supérieur à 99% et le taux d'oxydation est inférieur à 1%.

Conformément au procédé de préparation de l'invention, il est procédé à une étape de fourniture de $ZNO_3$ en une quantité prédéterminée, cette étape de fourniture pouvant avoir lieu :

- avant l'étape de préparation du composé de formule (I), c'est-à-dire que $ZNO_3$ est préalablement dissous dans une solution aqueuse avant l'introduction des sels susmentionnés pour la préparation du composé (I) ;
- simultanément à l'étape de préparation du composé (I) ;
- après l'étape de préparation du composé (I), c'est-à-dire après la formation du composé MXOH.

A l'issue des deux étapes susmentionnées, l'on obtient ainsi une suspension aqueuse de la composition comprenant un composé MXOH et un composé $ZNO_3$.

Pour obtenir une composition chimique apte à piéger l'hydrogène sous une forme pulvérulente, la suspension aqueuse peut être séchée à une température comprise généralement entre 70°C et 100°C sous atmosphère inerte.

La composition sèche obtenue peut être broyée, et éventuellement tamisée afin d'obtenir une granulométrie homogène. Ce traitement peut être utile, notamment lorsque la composition de la présente invention est destinée à être incorporée dans un matériau, notamment par souci d'intégrité de la matrice et d'homogénéité du piégeage de l'hydrogène au sein dudit matériau.

Vis-à-vis du piégeage de $H_2$, d'un point de vue théorique, plus le produit est divisé, plus sa surface spécifique est grande et donc plus le produit est efficace (rendement de piégeage proche du rendement thermodynamique). Expérimentalement, la réactivité de la composition vis-à-vis de $H_2$ est telle que la granulométrie du composé ne constitue pas un paramètre critique. En d'autres termes, le produit reste efficace quelle que soit sa granulométrie.

En revanche, la granulométrie des sels peut être importante pour leur incorporation dans un matériau solide, afin de préserver l'intégrité de la matrice (risque de fissuration) et de garantir une bonne homogénéité de l'enrobé. Dans le cas d'une matrice bitume, la granulométrie typique des sels incorporés varie, avantageusement, entre 0,2 et 300 $\mu$m avec un maximum dans l'intervalle 20 à 50 $\mu$m.

Les compositions de la présente invention peuvent être incorporées, ou enrobées, dans un matériau organique soit sous forme pulvérulente sèche ou humide, de préférence de granulométrie homogène, par exemple celles précitées, soit sous forme de précipité en suspension, de préférence dans une solution non oxydante.

Cette incorporation s'inscrit dans un certain nombre d'applications de la présente invention, dans lesquelles le piégeage de $H_2$ est réalisé au sein même d'un matériau, par exemple organique, où il est généré et/ou dans lequel il est susceptible de migrer, par diffusion interne ou externe. Le matériau forme alors une matrice dans laquelle est incorporée la composition apte à piéger l'hydrogène. Il peut s'agir par exemple de matériaux de conditionnement de déchets, tels les matériaux bitumineux pour les déchets nucléaires, ou de matériaux inertes destinés à stabiliser la composition apte à piéger de l'hydrogène initialement pulvérulent sous une forme compacte présentant une bonne tenue mécanique et donc plus aisément manipulable.

Un matériau organique susceptible d'incorporer la composition de la présente invention peut-être par exemple le bitume pour le conditionnement des déchets radioactifs.

Les bitumes utilisables dans la présente invention peuvent être ceux connus de l'homme du métier.

Les compositions de la présente invention sont, de préférence, incorporées dans un matériau organique chimiquement inerte vis-à-vis desdites compositions et dans une proportion adéquate pour ne pas fragiliser les propriétés mécaniques dudit matériau une fois durci.

Selon l'invention, dans l'exemple d'un matériau à base de bitume, la quantité de composition incorporable peut avantageusement être de 1,5% à 82% au total exprimée en masse de composition/masse de bitume.

Quelle que soit la matrice considérée, la quantité maximale de sels incorporables y compris de composition apte à piéger l'hydrogène, résulte d'un compromis entre taux d'incorporation, maniabilité et intégrité de l'enrobé final. Dans le cas d'une matrice bitume, la charge saline maximale, quel que soit le sel incorporé, selon ces critères ne doit généralement pas dépasser 55% massique (exprimé en masse de sel)/ enrobé soit 82% massique / bitume. Ce qui signifie que si la composition de l'invention est introduite à hauteur de x% par rapport à la masse de bitume, alors au maximum, le déchet est introduit à hauteur de (82 - x)% par rapport à la masse de bitume.

En conséquence, la quantité de composition incorporable en matrice bitume pourrait avantageusement varier entre 1,5% massique / bitume et 82% massique /bitume.

L'incorporation dans le matériau organique peut être réalisée par tout procédé connu de l'homme du métier pour incorporer une poudre ou une suspension dans un matériau, notamment par mélange, par exemple mécanique, de la composition de la présente invention avec le matériau, éventuellement rendu liquide au préalable, par exemple par solubilisation ou par chauffage, suivi du durcissement du matériau enrobé, éventuellement après évaporation du solvant et/ou refroidissement.

Lorsque la composition de l'invention se présente sous forme de préparation en suspension, la phase liquide peut être partiellement éliminée par décantation avant incorporation de la composition de l'invention dans le matériau organique. La phase liquide peut aussi être évaporée par chauffage lors de l'incorporation de la composition dans le matériau organique.

La présente invention se rapporte également à un matériau organique conditionnant, ledit matériau comprenant un matériau organique de conditionnement de déchets et la composition apte à piéger l'hydrogène selon l'invention.

Le déchet qui peut être conditionné au moyen d'un tel matériau conditionnant peut être un déchet solide radioactif, obtenu par exemple par traitement chimique de co-précipitation d'un effluent radioactif, ou bien un déchet solide industriel non radioactif comme par exemple un catalyseur usé non recyclable ou un déchet de charbon actif.

Le matériau organique de conditionnement peut être un bitume, par exemple tel que ceux connus de l'homme du métier pour le conditionnement de déchets radioactifs. Il peut également s'agir de tout autre matériau organique adéquat pour le conditionnement de déchets radioactifs, ou de tout autre matériau organique adéquat pour le conditionnement de déchets non radioactif suivant l'application qui est faite de la présente invention.

Dans un exemple d'application, la composition de la présente invention peut être utilisée par exemple pour piéger l'hydrogène de radiolyse au sein d'une matrice organique de conditionnement de déchets radioactifs.

Ainsi, la présente invention se rapporte également à un procédé de conditionnement d'un déchet solide, ledit procédé comprenant successivement les étapes suivantes :

- enrobage au moyen d'un matériau organique de conditionnement préalablement liquéfié par chauffage du déchet solide à conditionner et d'une composition apte à piéger l'hydrogène conforme à la présente invention ;
- refroidissement et solidification de l'enrobé obtenu à l'étape précédente.

Les matrices de conditionnement utilisables, ainsi que les déchets solides qui peuvent être enrobés suivant ce procédé sont décrits ci-dessus.

Lorsque le déchet solide est radioactif, il peut être obtenu par tout procédé connu de l'homme du métier pour extraire un déchet solide radioactif d'un effluent.

Par exemple, lorsque l'effluent est liquide, il peut s'agir avantageusement d'un traitement chimique de co-précipitation de l'effluent. Ainsi, selon une variante avantageuse du procédé de l'invention, le traitement chimique de co-précipitation peut avoir pour double objectif de décontaminer l'effluent radioactif par un traitement chimique de co-précipitation conduisant à un déchet solide radioactif et de synthétiser *in situ* la composition apte à piéger l'hydrogène suivant le procédé de synthèse décrit ci-dessus. Dans cette variante, la phase solide de co-précipitation obtenue, constituée d'un mélange du déchet solide radioactif et de la composition apte à piéger l'hydrogène, est incorporée directement dans le matériau organique de conditionnement suivant l'étape a) du procédé de l'invention.

Selon l'invention, dans l'exemple d'un enrobage en matrice bitume, la charge saline maximale (c'est-à-dire la somme déchet + composition de l'invention) dans l'enrobé ne peut dépasser généralement 55% / enrobé (exprimée en masse de sel / masse d'enrobé) soit 82% / bitume (exprimée en masse de sel / masse de bitume).

De manière générale, de préférence, le déchet solide à conditionner et la composition conforme à la présente invention sont mélangés avant leur enrobage, afin d'obtenir une répartition homogène de la composition de l'invention et du déchet au sein de l'enrobé et favoriser ainsi l'efficacité de piégeage de l'hydrogène.

La présente invention trouve de très nombreuses applications, puisqu'elle est utilisable dans toutes les situations, par exemple dans l'industrie ou au laboratoire, où de l'hydrogène (ou du tritium) gazeux est généré, dégagé ou évacué, dans l'objectif par exemple d'en limiter les rejets dans l'environnement, notamment pour des raisons de pollution ou de contamination, ou d'en contrôler les teneurs dans des milieux confinés, notamment pour des raisons de sécurité.

La mise en oeuvre d'un piège à hydrogène ou à tritium au moyen des compositions de la présente invention peut être réalisée par différents moyens, qui seront choisis en fonction des conditions d'utilisation et du milieu dans lequel le piège est mis en oeuvre. A titre d'exemples, on peut citer les moyens suivantes :

- par contact direct de l'hydrogène gazeux avec la composition pulvérulente à l'abri de l'air ;
- par contact direct de l'hydrogène, introduit par bullage ou bien généré *in situ,* avec une suspension constituée par la composition de la présente invention en solution non oxydante ;
- par maintien de la composition pulvérulente entre deux plaques poreuses à travers lesquelles l'hydrogène ou le gaz comprenant de l'hydrogène à piéger peut diffuser ;
- par incorporation de la composition de la présente invention dans un matériau inerte chimiquement vis-à-vis du produit. Il peut s'agir d'un matériau organique ou non, solide ou à l'état visqueux, à travers lequel l'hydrogène diffuse ou au sein duquel l'hydrogène est généré, par exemple par radiolyse ;
- par dépôt surfacique de la composition apte à piéger l'hydrogène, en couche d'épaisseur adéquate et à l'abri de l'air, sur tout ou partie des faces externes du système chimique générateur d'hydrogène gazeux ;
- par incorporation d'une ou de plusieurs couches successives de la composition de la présente invention en sandwich au sein du système chimique générateur d'hydrogène gazeux.

Dans l'exemple du conditionnement de déchets radioactifs de faible et moyenne activité en matrice bitume, la composition apte à piéger l'hydrogène de la présente invention; intégrée au sein de la matrice bitume, dispose de plusieurs atouts majeurs :

- elle possède la double propriété chimique de décontamination en radionucléides et de piège à hydrogène ;
- l'utilisation en routine de la composition de la présente invention dans le cadre d'un procédé de traitement des effluents évite de recourir à d'autres réactifs piégeurs d'hydrogène, dont la stabilité chimique au sein des boues de retraitement reste à démontrer et dont l'utilisation ne serait pas économiquement rentable puisqu'il entraînerait une augmentation de la quantité de boue et donc du nombre de colis ;
- inerte chimiquement vis-à-vis de la matrice bitume, la composition de la présente invention conserve ses capacités de piège à hydrogène après les opérations d'enrobage en température des boues dans le bitume ;

- insensible à l'irradiation et protégé de l'oxydation au sein de la matrice bitume, la composition de la présente invention conserve durablement sa réactivité vis-à-vis de l'hydrogène ;
- la composition de la présente invention est réactive aussi bien vis-à-vis de l'hydrogène gazeux dans les conditions normales de température et de pression que de l'hydrogène généré, par radiolyse notamment, au sein de la matrice bitume.

Ainsi, l'incorporation de la composition de la présente invention dans un matériau organique, par exemple le bitume servant de matrice de conditionnement de déchets radioactifs, permet de réduire la production apparente d'hydrogène de radiolyse et corrélativement l'aptitude au gonflement du matériau. Cette application est économiquement importante pour les industriels du retraitement car les propriétés chimiques de la composition de la présente invention laissent la possibilité d'augmenter sensiblement les activités équivalentes incorporées par colis de déchets tout en garantissant une bonne tenue mécanique du matériau vis-à-vis de la production de gaz.

D'autres caractéristiques et avantages de la présente invention apparaîtront encore à la lecture des exemples qui suivent, donnés bien entendu à titre illustratif et non limitatif, en référence aux figures annexées.

## BRÈVE DESCRIPTION DES FIGURES

La figure 1 est un graphique représentant la quantité totale de $H_2$ consommé ($H_2$/Co exprimée en mol/mol) par la composition caractérisée par un rapport $NO_3$/Co de 0,53 en fonction du temps t (exprimé en heures).

La figure 2 est un graphique représentant la quantité de $H_2$ consommé (quantifiée par le rapport ($H_2$/Co) exprimée en mol/mol) en fonction du rapport $NO_3$/Co (exprimé en mol/mol) respectivement pour :

- des compositions du type [CoSOH, $NaNO_3$] seules à l'état pulvérulent (courbe -•-) ;
- des boues de retraitement de synthèse à teneurs en nitrates variables dopées avec la suspension de CoSOH dont la synthèse est décrite dans l'exemple 1 (courbe -□-) ;
- un enrobé bitume d'une boue de retraitement de synthèse en milieu nitrate dopée avec la suspension de CoSOH dont la synthèse est décrite dans l'exemple 1 (courbe -▨-)

## EXPOSÉ DÉTAILLÉ DE MODES DE RÉALISATION PARTICULIERS

EXEMPLE 1

Dans cet exemple, un composé de formule CoS(OH) a été synthétisé en laboratoire par mélange sous agitation magnétique de deux solutions aqueuses de sulfate de cobalt (pureté 97% massique) à 83,5 g/L en $Co^{2+}$ et de sulfure de sodium (de formulation $Na_2S$, 8-10 $H_2O$ pureté 35% massique en $Na_2S$) à 145 g/L en $Na_2S$ dans les proportions S/Co=1. Les pH et $E_H$ initiaux des réactifs sont respectivement de 1,5 et +0,400 V/Réf pour la solution de sulfate de cobalt et de 12,8 et - 0,760 V/Réf pour la solution de sulfure de sodium. Après mélange des réactifs, la suspension a été laissée sous agitation jusqu'à stabilisation de ces caractéristiques pH et $E_H$, à savoir :

$E_H$= -0,133 V/Réf et pH= 9,2.

On entend par Réf, le fait que les potentiels soient mesurées dans ce cas de figure par rapport à une électrode de référence Ag(s)/AgCl(s)/KCl$_{saturé}$.

Dans cette expérience, dix millilitres de la suspension aqueuse obtenue de CoS(OH) (soit 7,85 millimoles de Co) ont été prélevés et versés dans un tube à centrifuger. Après centrifugation et élimination du surnageant, le précipité a été lavé par deux fois avec 10 mL d'eau déminéralisée. A l'issue du deuxième lavage, le précipité a été repris avec 10 mL d'eau déminéralisée puis 0,351 g de $NaNO_3$ (soit 4,13 millimoles) ont été ajoutés à la suspension aqueuse. Après agitation, le système a été versé dans un cristallisoir puis mis à sécher à 70°C pendant 48 heures dans une étuve.

Après séchage, la totalité du produit sec grossièrement réduit en poudre (soit 1,15 g environ) a été placée dans une cellule étanche de 235 mL à température ambiante (22±3°C) sous atmosphère d'hydrogène pur. La consommation d'hydrogène par la composition est suivie expérimentalement par mesure de la chute de pression d'hydrogène dans le réacteur, l'atmosphère étant régulièrement renouvelée pour compenser l'appauvrissement en hydrogène en fonction du temps. L'expérience s'est poursuivie jusqu'à stabilisation de la pression de $H_2$ dans le réacteur, indiquant que la capacité de piégeage maximale de la composition a été atteinte.

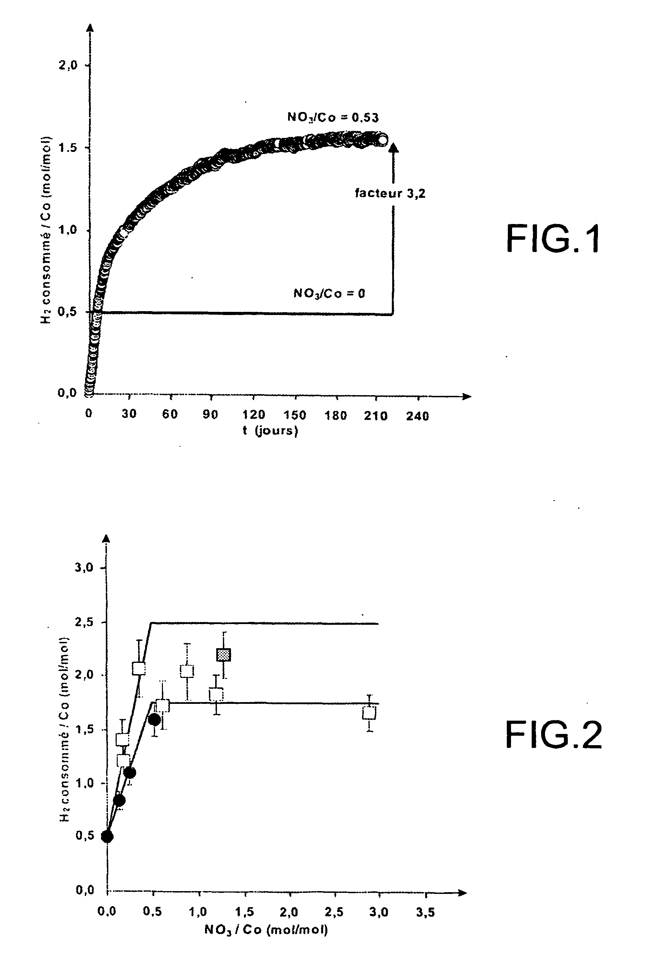

A partir des mesures de variations de pression (en mbar) en fonction du temps converties par l'équation des gaz parfaits en quantité d'hydrogène piégé (en moles), on calcule l'évolution au cours du temps du rapport $H_2$/Co, exprimé en moles de $H_2$ piégé par moles de Co, jusqu'à atteindre la capacité de piégeage maximale (comme cela est représenté sur la figure 1).

A partir des données expérimentales, la capacité de piégeage de la composition de la présente invention testée lors de cet essai a pu être évaluée à environ 1,58 mole $H_2$/mole de Co, valeur significativement plus élevée (d'un facteur 3,2) que la capacité de piégeage du composé CoSOH seul pour lequel le rapport $NO_3$/Co est nul.

Ainsi, cette expérience démontre que :

- d'une part, les compositions de la présente invention sont aptes à piéger spontanément et quantitativement à température ambiante l'hydrogène gazeux, selon une réaction du type gaz-solide ;
- d'autre part, un sel de nitrate en association avec le composé CoSOH augmente significativement la capacité de piégeage du composé CoSOH d'un facteur équivalent à 3,2±0,3 dans le cadre de cet essai.

EXEMPLE 2

Plusieurs prélèvements de 10 millilitres de suspension aqueuse de CoSOH dont la synthèse est décrite dans l'exemple 1 et auxquels ont été rajoutées sans lavage préalable du précipité des quantités variables de NaNO$_3$ ont été mis à sécher après agitation à 70°C pendant 48 heures. Les sels secs obtenus grossièrement broyés, pour lesquels le rapport NO$_3$/Co varie de 0 à 0,53, ont été soumis au test de piégeage de H$_2$ décrit dans l'exemple 1 et la capacité maximale de piégeage a été déterminée pour chacun d'entre eux (symbole -•- sur la courbe de la figure 2).
D'autres tests de piégeage similaires ont été menés sur :

- des échantillons de boue de synthèse (type boue de co-précipitation d'effluents liquides radioactifs) à teneurs en nitrates variables, dopées avec la suspension de CoSOH dont la synthèse est décrite dans l'exemple 1. Pour ces essais, le rapport NO$_3$/Co varie entre 0 et 3 (symbole-□- sur la courbe de la figure 2). La procédure de préparation d'échantillons est identique à celle décrite dans l'exemple 1) ;
- un échantillon d'enrobé bitume d'une boue de retraitement de synthèse en milieu nitrate dopée avec la suspension de CoSOH dont la synthèse est décrite dans l'exemple 1 et présentant un rapport NO$_3$/Co égal à 1,3 (symbole sur la figure 2).

Pour tous ces essais, la capacité maximale de piégeage (exprimée en mol H$_2$/mol de Co) a été déterminée en fin d'expérience, à stabilisation de la pression de H$_2$ dans le réacteur. Les variations des capacités de piégeage ainsi déterminées en fonction du rapport NO$_3$/Co sont représentées sur la figure 2.
La figure 2 montre que la capacité maximale de piégeage de H$_2$ de la composition chimique de la présente invention varie en fonction du rapport molaire NO$_3$/Co selon les lois expérimentales suivantes :

- si le rapport NO$_3$/Co est égal à 0, alors le rapport H$_2$/Co est égal à 0,5 ;

- si le rapport NO$_3$/Co est compris entre 0 et 0,5, alors le rapport H$_2$/Co se situe entre la valeur minimale de 0,5 + 2,5 (NO$_3$/Co) et la valeur maximale de 0,5 + 4 (NO$_3$/Co) ;

- si le rapport NO$_3$/Co est supérieur à 0,5, alors le rapport H$_2$/Co se situe dans la plage comprise entre 1,75 et 2,5. Dans ces conditions, la capacité de piégeage de la composition de la présente invention est maximale et ne dépend plus du rapport NO$_3$/Co.

Ces observations démontrent que la composition de la présente invention sous la forme [CoS(OH), NaNO$_3$] conserve les mêmes performances de piégeage si elle est présente au sein d'un système chimique complexe dans lequel elle est chimiquement stable, comme, par exemple, une boue de co-précipitation d'effluents radioactifs de faible et moyenne activité. De même, les performances de piégeage de la composition restent inchangées si elle est incorporée, seule ou en mélange avec une boue, dans un matériau d'enrobage, dans lequel elle est chimiquement stable, le bitume par exemple, et au sein duquel de l'hydrogène est généré, par radiolyse par exemple.

**Revendications**

1. Composition apte à piéger de l'hydrogène comprenant :

    (a) au moins un composé minéral de formule (I) suivante :

    $$MX (OH) \qquad (I)$$

    dans laquelle :

        - M représente un élément de transition divalent ;
        - O représente un atome d'oxygène ;
        - X représente un atome choisi parmi S, Se, Te, Po; et
        - H représente un atome d'hydrogène ; et

    (b) au moins un sel de nitrate de formule (II) suivante :

$$ZNO_3 \qquad (II)$$

dans laquelle Z est un cation monovalent.

**2.** Composition selon la revendication 1, dans laquelle M est choisi dans le groupe constitué par Co, Ni.

**3.** Composition selon la revendication 1, dans laquelle M est Co.

**4.** Composition selon l'une quelconque des revendications 1 à 3, dans laquelle X est S.

**5.** Composition selon l'une quelconque des revendications 1 à 4, dans laquelle Z est choisi dans le groupe constitué par $Li^+$, $Na^+$ ou $K^+$.

**6.** Composition selon l'une quelconque des revendications précédentes, dans laquelle Z est $Na^+$.

**7.** Composition selon l'une quelconque des revendications précédentes, dans laquelle le rapport ($NO_3$/M) est supérieur à 0,5.

**8.** Procédé de préparation d'une composition telle que définie à la revendication 1, comprenant :

- une étape de préparation du (des) composé(s) de formule (I) tel(s) que défini(s) à la revendication 1;
- une étape de fourniture en composé(s) de formule (II) tel(s) que défini (s) à la revendication 1, cette étape pouvant avoir lieu avant, simultanément et/ou après l'étape de préparation du(des) composé(s) de formule (I).

**9.** Procédé de préparation d'une composition selon la revendication 1, dans lequel l'étape de préparation du(des) composé(s) de formule (I) comprend le mélange en solution aqueuse d'un sel dissous de X (c'est-à-dire $X^{2-}$) et d'un sel dissous de M (c'est-à-dire $M^{2+}$), M et X étant tels que définis à la revendication 1.

**10.** Procédé de préparation d'une composition selon la revendication 9, dans lequel le mélange du sel dissous de X et du sel dissous de M s'effectue à l'air pendant un temps suffisant pour obtenir une stabilisation des paramètres $E_H$ et pH.

**11.** Procédé de préparation d'une composition selon la revendication 9 ou 10, dans lequel le sel dissous de X est choisi parmi $Na_2X$, $(NH_4)_2X$, $Li_2X$, $K_2X$ ou un mélange de ceux-ci.

**12.** Procédé de préparation d'une composition selon l'une quelconque des revendications 9 à 11, dans lequel le sel dissous de M est choisi parmi $MSO_4$, $M(ClO_4)_2$, $MCl_2$.

**13.** Procédé de préparation d'une composition selon l'une quelconque des revendications 8 à 12, dans lequel M est Co ou Ni.

**14.** Procédé de préparation d'une composition selon l'une quelconque des revendications 8 à 13, dans lequel X est S.

**15.** Procédé de préparation d'une composition selon l'une quelconque des revendications 8 à 14, dans lequel Z est $Na^+$.

**16.** Procédé de conditionnement d'un déchet solide, ledit procédé comprenant successivement les étapes suivantes :

- enrobage au moyen d'un matériau organique de conditionnement préalablement liquéfié par chauffage du déchet solide à conditionner et d'une composition apte à piéger l'hydrogène telle que définie selon l'une quelconque des revendications 1 à 7;
- refroidissement et solidification de l'enrobé obtenu à l'étape précédente.

**17.** Procédé de conditionnement selon la revendication 16, dans lequel le matériau organique est un bitume.

**18.** Procédé de conditionnement selon la revendication 16 ou 17, dans lequel le déchet solide est radioactif.

**19.** Matériau organique de conditionnement de déchets radioactifs comprenant un matériau organique de conditionnement et au moins une composition apte à piéger l'hydrogène telle que définie selon l'une quelconque des revendications 1 à 7.

20. Matériau organique de conditionnement selon la revendication 19, dans lequel le matériau organique de conditionnement est un bitume.

21. Utilisation d'une composition telle que définie selon l'une quelconque des revendications 1 à 7 pour absorber l'hydrogène.

**Claims**

1. Composition capable of trapping hydrogen comprising:

   (a) at least one mineral compound of formula (I) below:

$$MX(OH) \qquad (I)$$

   in which:

   - M represents a divalent transition element;
   - O represents an oxygen atom;
   - X represents an atom chosen from S, Se, Te, Po; and
   - H represents a hydrogen atom; and

   (b) at least one nitrate salt of formula (II) below:

$$ZNO_3 \qquad (II)$$

   in which Z is a monovalent cation.

2. Composition according to Claim 1, in which M is chosen from the group composed of Co and Ni.

3. Composition according to Claim 1, in which M is Co.

4. Composition according to any one of Claims 1 to 3, in which X is S.

5. Composition according to any one of Claims 1 to 4, in which Z is chosen from the group composed of $Li^+$, $Na^+$ or $K^+$.

6. Composition according to any one of the preceding claims, in which Z is $Na^+$.

7. Composition according to any one of the preceding claims, in which the $NO_3/M$ ratio is greater than 0.5.

8. Method of preparing a composition as defined in Claim 1, comprising:

   - a step of preparing the compound(s) of formula (I) as defined in Claim 1;
   - a step of supplying with compound (s) of formula (II) as defined in Claim 1, this step possibly taking place before, at the same time as and/or after the step of preparing the compound(s) of formula (I).

9. Method of preparing a composition according to Claim 1, in which the step of preparing the compound(s) of formula (I) comprises the mixing, in aqueous solution, of a dissolved salt of X (i.e. $X^{2-}$) and of a dissolved salt of M (i.e. $M^{2+}$), M and X being as defined in Claim 1.

10. Method of preparing a composition according to Claim 9, in which the mining of the dissolved salt of X and of the dissolved salt of M is carried out in air for a sufficient time to obtain a stabilization of the $E_H$ and pH parameters.

11. Method of preparing a composition according to Claim 9 or 10, in which the dissolved salt of X is chosen from $Na_2X$, $(NH_4)_2X$, $Li_2X$, $K_2X$ or a mixture of these compounds.

**12.** Method of preparing a composition according to any one of Claims 9 to 11, in which the dissolved salt of M is chosen from $MSO_4$, $M(ClO_4)_2$ or $MCl_2$.

**13.** Method of preparing a composition according to any one of Claims 8 to 12, in which M is Co or Ni.

**14.** Method of preparing a composition according to any one of Claims 8 to 13, in which X is S.

**15.** Method of preparing a composition according to any one of Claims 8 to 14, in which Z is $Na^+$.

**16.** Method of encapsulating a solid waste, said method successively comprising the following steps:

- encapsulation using an organic encapsulation material, liquefied beforehand by heating the solid waste to be encapsulated, and a composition capable of trapping the hydrogen as defined according to any one of Claims 1 to 7;
- cooling and solidification of the encapsulant obtained in the preceding step.

**17.** Encapsulation method according to Claim 16, in which the organic material is a bitumen.

**18.** Encapsulation method according to Claim 16 or 17, in which the solid waste is radioactive.

**19.** Organic material for encapsulating radioactive waste comprising an organic encapsulation material and at least one composition capable of trapping the hydrogen as defined according to any one of Claims 1 to 7.

**20.** Organic encapsulation material according to Claim 19, in which the organic encapsulation material is a bitumen.

**21.** Use of a composition as defined according to any one of Claims 1 to 7 for absorbing hydrogen.


**Patentansprüche**

**1.** Zusammensetzung, die zur Bindung von Wasserstoff geeignet ist, enthaltend:

(a) mindestens eine mineralische Verbindung der folgenden Formel (I):

$$MX(OH), \qquad (I)$$

worin M ein zweiwertiges Übergangselement,
O ein Sauerstoffatom,
X ein Atom, ausgewählt aus S, Se, Te, Po,
H ein Wasserstoffatom darstellt; und

(b) mindestens ein Nitratsalz der folgenden Formel (2):

$$ZNO_3, \qquad (II)$$

worin Z ein einwertiges Kation darstellt.

**2.** Zusammensetzung nach Anspruch 1, worin M aus der Gruppe, bestehend aus Co, Ni ausgewählt ist.

**3.** Zusammensetzung nach Anspruch 1, worin M Co darstellt.

**4.** Zusammensetzung nach einem der Ansprüche 1 bis 3, worin X S darstellt.

**5.** Zusammensetzung nach einem der Ansprüche 1 bis 4, worin Z aus der Gruppe, bestehend aus $Li^+$, $Na^+$ oder $K^+$ ausgewählt ist.

**6.** Zusammensetzung nach einem der Ansprüche, worin Z $Na^+$ darstellt.

7. Zusammensetzung nach einem der Ansprüche, worin das Verhältnis ($NO_3$/M) größer als 0,5 ist.

8. Verfahren zur Herstellung einer Zusammensetzung, wie in Anspruch 1 definiert, umfassend eine Stufe der Herstellung der Verbindung(en) der Formel (I), wie in Anspruch 1 definiert;
   eine Stufe der Bereitstellung der Verbindung(en) der Formel (II), wie in Anspruch 1 definiert, wobei diese Stufe vor, gleichzeitig mit und nach der Stufe der Herstellung der Verbindung(en) der Formel (I) stattfinden kann.

9. Verfahren zur Herstellung einer Zusammensetzung nach Anspruch 1, wobei die Stufe der Herstellung der Verbindung (en) der Formel (I) die Vermischung eines gelösten Salzes von X (das heißt $X^{2-}$) mit einem gelösten Salz von M (das heißt $M^{2+}$) in wässriger Lösung umfasst, wobei M und X wie in Anspruch 1 definiert ist.

10. Verfahren zur Herstellung einer Zusammensetzung nach Anspruch 9, wobei die Vermischung des gelösten Salzes von X mit dem gelösten Salz von M in Luft so lange erfolgt, bis eine Stabilisierung der Parameter $E_H$ und pH erreicht ist.

11. Verfahren zur Herstellung einer Zusammensetzung nach Anspruch 9 oder 10, worin das gelöste Salz von X aus $Na_2X$, $(NH_4)_2X$, $Li_2X$, $K_2X$ oder aus einem Gemisch davon ausgewählt ist.

12. Verfahren zur Herstellung einer Zusammensetzung nach einem der Ansprüche 9 bis 11, worin das gelöste Salz von M aus $MSO_4$, $M(ClO_4)_2$, $MCl_2$ ausgewählt ist.

13. Verfahren zur Herstellung einer Zusammensetzung nach einem der Ansprüche 8 bis 12, worin M Co oder Ni darstellt.

14. Verfahren zur Herstellung einer Zusammensetzung nach einem der Ansprüche 8 bis 13, worin X S darstellt.

15. Verfahren zur Herstellung einer Zusammensetzung nach einem der Ansprüche 8 bis 14, worin Z $Na^+$ darstellt.

16. Verfahren zur Konditionierung von festem Abfall, welches nacheinander folgende Stufen umfasst:

   Umhüllung des zu konditionierenden festen Abfalls mit einem zuvor durch Erhitzen verflüssigten organischen Material und einer zur Bindung von Wasserstoff geeigneten Zusammensetzung, wie in einem der Ansprüche 1 bis 7 definiert;
   Abkühlung und Verfestigung der auf der vorhergegangenen Stufe erhaltenen Umhüllung.

17. Verfahren zur Konditionierung nach Anspruch 16, worin das organische Material ein Bitumen darstellt.

18. Verfahren zur Konditionierung nach Anspruch 16 oder 17, worin der feste Abfall radioaktiv ist.

19. Organisches Material zur Konditionierung von radioaktivem Abfall, enthaltend ein organisches Konditionierungsmaterial und mindestens
   eine Bindung von Wasserstoff geeignete Zusammensetzung, wie in den Ansprüchen 1 bis 7 definiert.

20. Organisches Material zur Konditionierung nach Anspruch 19, worin das organische Konditionierungsmaterial ein Bitumen darstellt.

21. Verwendung einer Zusammensetzung, wie in einem der Ansprüche 1 bis 7 definiert, zur Absorption von Wasserstoff.

FIG.1

FIG.2

**RÉFÉRENCES CITÉES DANS LA DESCRIPTION**

**Documents brevets cités dans la description**

- WO 0168516 A
- US 6645396 B
- US 5888665 A
- WO 9726082 A
- FR 2859202